# EUROPÄISCHE PATENTSCHRIFT

(11) **EP 1 147 488 B1**
(45) Veröffentlichungstag und Bekanntmachung des Hinweises auf die Patenterteilung: **28.12.2005**
(21) Anmeldenummer: 99959298.3
(22) Anmeldetag: 22.11.1999
(51) Int. Cl.: G06K 19/077, B29C 43/18

(54) **VERFAHREN ZUM EINBETTEN EINES IC-BAUSTEINS IN EINER GESCHÄUMTEN SCHICHT EINER CHIPKARTE**
METHOD FOR EMBEDDING AN IC COMPONENT INTO A FOAMED LAYER OF A CHIP CARD
PROCEDE POUR ENROBER UN MODULE A CIRCUITS INTEGRES DANS LA COUCHE MOUSSEE D'UNE CARTE A PUCE

(30) Priorität: 27.11.1998 DE 19854986
(43) Veröffentlichungstag der Anmeldung: 24.10.2001
(73) Patentinhaber: Giesecke & Devrient GmbH, 81677 München (DE)
(72) Erfinder: HOPPE, Joachim, D-81377 München (DE); HOHMANN, Arno, D-81369 München (DE); STRASSMAIER, Josef, D-83550 Emmering (DE); ZAPF, Rudolf, D-81477 München (DE)
(74) Vertreter: Klunker . Schmitt-Nilson . Hirsch
(86) Internationale Anmeldenummer: PCT/EP1999/008986
(87) Internationale Veröffentlichungsnummer: WO 2000/033248

(56) Entgegenhaltungen:
- WO-A-93/25978
- CH-A- 672 285
- DE-A- 3 122 981
- DE-A- 4 142 392
- DE-A- 4 241 482
- DE-A- 4 435 802
- DE-A- 4 444 788
- DE-A- 19 645 069
- FR-A- 2 624 999
- US-A- 5 476 629

## Beschreibung

Die Erfindung betrifft Verfahren zur Herstellung einschichtiger und mehrschichtiger Karten mit elektronischen Bauelementen sowie ein Halbzeug für solche Karten.

Karten mit elektronischen Bauelementen, sogenannte Chipkarten, sind z.B. als Ausweis- oder Kreditkarten bekannt. Sie enthalten integrierte Schaltungen und weitere elektronische Bauelemente, wie einen Transponder in Form einer Spule für die kontaktlose Kommunikation mit einem externen Gerät oder Kontaktflächen zur kontaktierenden Kommunikation mit solchen Geräten.

Chipkarten werden auf verschiedene Weise hergestellt, z.B. im Spritzgießverfahren, im Montageverfahren oder im Laminierverfahren. Beim Spritzgießverfahren werden die elektronischen Bauelemente, die in den Kartenkörper integriert werden sollen, mit einem Kunststoffmaterial umspritzt. Beim Montageverfahren werden die elektronischen Bauelemente häufig in Form sogenannter Module, die den Chip und die Kontaktelemente aufweisen, in eine Aussparung eines Kartenkörpers eingesetzt und beispielsweise mittels Klebstoff eingebettet. Im Laminierverfahren hergestellte Chipkarten bestehen aus mehreren aufeinander laminierten Kunststofffolien, von denen eine oder mehrere Ausstanzungen aufweisen, in denen die elektronischen Bauelemente oder Module eingebettet sind. Unter Anwendung von Wärme und Druck werden die Folien fest miteinander verbunden. Heiß und kalt aushärtende Kleber können dabei zusätzlich eingesetzt werden.

Die vorliegende Erfindung betrifft Verfahren zur Herstellung von Chipkarten, bei denen die elektronischen Bauteile entweder als solche oder in Form vorgefertigter Module in vorbereitete Kavitäten, d.h. Aussparungen oder Ausstanzungen, eingebettet werden.

Das Einbringen der Kavitäten ist aufwendig. Bei der Montagetechnik werden die Kavitäten in die einzelne Karte eingebracht, indem die Karte z.B. mit einer Kavität spritzgegossen oder aber eine Kavität später durch Ausfräsung erzeugt wird. Das Ausfräsen ist aber sehr aufwendig.

Beim Laminierverfahren werden große Kunststoffbögen oder von Rollen abgezogene Kunststofffolien aufeinander laminiert, von denen einzelne Bögen/Folien die entsprechenden Kavitäten aufweisen, und die einzelne Karte wird aus den Bögen/Folien herausgestanzt In manchen Fällen wird auf Kavitäten verzichtet, und es werden einzelne, unempfindlichere elektronische Bauelemente, wie z.B. eine Spule, unmittelbar zwischen die zu laminerenden Folien gelegt. Während des Laminiervorgangs erweicht das Folienmaterial derart, dass es um solche Bauteile herumfließt und sie fest in das Laminat einbettet. Es hat sich allerdings herausgestellt, dass diese Art der Einbettung zu ungleichmäßigen Materialverfließungen führt, was sich wiederum auf die Qualität der Oberfläche der Chipkarte negativ auswirkt. Außerdem kann diese Art der Einbettung zu enormen mechanischen Spannungsspitzen an dem elektronischen Bauteil und zu dessen Zerstörung führen.

Aus der DE 44 35 802 A1 ist ein Verfahren for Herstellung einer Karte bekannt, bei dem mittels eines PreBwerkzeuges eine Aussparungen für ein Modul in eine aus Kunststoffgranulat oder Kunststoffpulver bestehende Formmasse gepreBt wird, die dabei bis zur FlieBfähigkeit erhitzt wird. Das Verfahren ist aufwendig und nicht auf Folien oder Bogen übertragbar.

Aus der DE 19617 621 A1 ist ein Verfahren zum Herstellen eines Laminats mit mindestens drei aufeinander folgenden Schichten und mindestens einem teilweise in die mittlere der drei Schichten eingebetteten funktionalen Bauteil bekannt. Die mittlere Schicht wird durch einen geschlossen porigen PVC-Schaum gebildet. In diesen PVC-Schaum werden die funktionalen Bauteile, z.B. Chips oder insbesondere Spulen, eingedrückt. Dies ist möglich, weil die mittlere Schicht zumindest im Zeitpunkt des Einbettens des funktionalen Bauteils derart nachgiebig ist, dass sie entsprechend dem in die mittlere Schicht einzubettenden Volumen des funktionalen Bauteils ausweichen kann. Zweck dieser Lösung ist es, einen Arbeitsgang einzusparen, indem das Einbringen von Aussparungen für das funktionale Bauteil überflüssig wird. Insbesondere beim Einbetten von Spulen entfällt darüber hinaus das nachträgliche Ausfüllen des Spuleninnenraums mit einem Harz. Des Weiteren gestattet die Lösung die Verwendung von Bestückungsautomaten, da eine besondere Positioniergenauigkeit beim Einbetten der funktionalen Bauteile in irgendwelche vorgefertigten Kavitäten nicht mehr erforderlich ist.

Der Erfindung liegt die Aufgabe zugrunde, ein einfaches Verfahren zur Herstellung von Chipkarten zur Verfügung zu stellen, bei dem die elektronischen Bauelemente in vorbereitete Kavitäten eingesetzt werden können.

Die Aufgabe wird durch die Merkmale der nebengeordneten Ansprüche gelöst.

Gemäß der Erfindung wird das elektronische Bauelement in eine vorbereitete Kavität eingesetzt, die in einem geschäumten Kunststoffmaterial durch lokales Verdichten des Kunststoffmaterials erzeugt wird.

Im Gegensatz zu den bisher bekannten Verfahren kann das Prägen einer Kavität in ein geschäumtes Kunststoffmaterial auf sehr einfache und damit kostengünstige Weise durchgeführt werden.

Das geschäumte Kunststoffmaterial, das vorzugsweise eine aus PVC (Polyvinylchlorid), ABS (Acrylnitril/Butadien/Styrol-Polymerisat) oder PET (Polyethylenterephthalat) hergestellte, geschäumte Kunststofffolie ist, kann entweder den Kartenkörper selbst, eine oder mehrere zentrale Lagen einer laminierten Karte, d.h. ein "Karteninlett", oder ein Einsatzelement für eine Aussparung einer Karte bilden. Sofern das geschäumte Kunststoffmaterial nicht selbst den Kartenkörper bildet, handelt es sich um ein Halbzeug.

Nachfolgend wird die Erfindung anhand der begleitenden Zeichnungen beispielhaft beschrieben. Es zeigen:
- Fig.1: eine Chipkarte mit Standardmaßen;
- Fig. 2: schematisch den Vorgang beim Prägen einer Kavität;
- Fig. 3: schematisch den Vorgang beim Prägen einer zweistufigen Kavität;
- Fig. 4: Verfahrensschritte zum Herstellen einer einschichtigen Chipkarte;
- Fig. 5: eine alternative Verfahrensschrittfolge zum Herstellen einer einschichtigen Chipkarte;
- Fig. 6: Verfahrensschritte zum Herstellen einer mehrschichtigen Chipkarte;
- Fig. 7: eine weitere mögliche Verfahrensschrittfolge zum Herstellen einer mehrschichtigen Chipkarte;
- Fig. 8: eine dritte mögliche Verfahrensschrittfolge zum Herstellen einer mehrschichtigen Chipkarte;
- Fig. 9: ein in eine einschichtige Chipkarte eingesetztes Einsatzelement;
- Fig. 10: ein in eine mehrschichtige Chipkarte eingesetztes Einsatzelement;
- Fig.11: das Prägen eines Kunststoffwerkstoffs zwischen zwei Formwerkzeugen und
- Fig. 12: eine besondere Ausführungsform eines Halbzeugs für die Herstellung von Chipkarten.

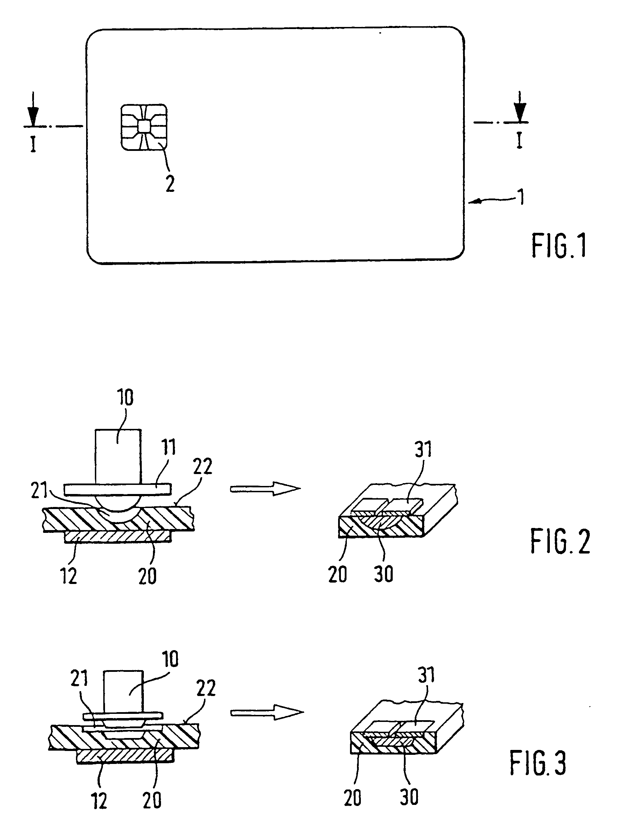

Fig.1 zeigt eine Chipkarte 1 mit Standardabmessung gemäß der ISO-Norm 7810. In der Karte kann beispielsweise ein Modul 2 in einer Kavität angeordnet sein. Erfindungsgemäß ist die Kavität in ein geschäumtes Kunststoffmaterial eingeprägt, bevor das Modul oder ein anderes elektronisches Bauteil eingesetzt wird.

In Fig. 2 und 3 ist der Prägevorgang schematisch dargestellt. Das Kunststoffmaterial 20, z.B. eine geschäumte Kunststofffolie, wird zwischen ein erstes, oberes Formwerkzeug 10 und ein zweites, unteres Formwerkzeug 12 gebracht, wobei das obere Formwerkzeug 10 als Prägestempel ausgebildet ist und das untere Formwerkzeug ein stationäres Gegenlager bildet. Mit Hilfe des Stempels 10 wird eine Kavität 21 in das Kunststoffmaterial 20 eingeprägt. Die Kavität 21 kann jede beliebige, prägefähige Gestalt haben. In Fig. 2 ist eine einstufige und in Fig. 3 ein zweistufige Kavität eingeprägt worden. Der Kragen 11 an dem Stempel 10 in Fig. 2 verhindert eine Wulstbildung beim Prägen des Kunststoffmaterials 20. In die Kavität 21 wird z.B. ein Modul 30 mit Kontaktflächen 31 eingesetzt. Die Kontaktflächen 31 können auf der Oberfläche 22 des Kunststoffmaterials 20, aufliegen, d.h. , das Chipmodul wird lediglich aufgesetzt. Dazu werden vorzugsweise spezielle Chipmodule eingesetzt, deren Kontaktflächen besonders flach ausgebildet sind. In einem nachfolgenden Laminierverfahren kann aber auch eine als Fensterfolie ausgebildete Deckfolie auf das Kunststoffmaterial aufgebracht werden, so dass die Deckfolie plan mit den Kontaktflächen 31 abschließt. In Fig. 3 ist demgegenüber eine Ausführungsform dargestellt, bei der der Chip 30 mit den Kotaktflächen 31 in eine zweistufige Kavität eingebracht ist.

Diese Art der Elementeinbettung wird vorzugsweise an vorgefertigten Karten oder Kartenhalbzeugen durchgeführt, um das Erzeugen von Kavitäten mittels Fräsen einzusparen. Bei Elementen, die nicht von außen in die Karten einmontiert werden können, hat sich gegenüber dem Einbetten in nicht geschäumte Kunststoffmaterialen als vorteilhaft erwiesen, dass beim Laminiervorgang oder Einkaschiervorgang nur vergleichsweise niedrige mechanische Spannungsspitzen an den Bauteilen auftreten. Dies wird darauf zurückgeführt, dass sich vorhandene Lufteinschlüsse im geschäumten Kunststoffmaterial bereits vor der temperaturbedingten Erweichung des Materials in gewissem Maße verformen, so dass Kraftspitzen im Bereich der Elemente egalisiert werden können. Soweit ein vollständiges Komprimieren des geschäumten Kunststoffmaterials vermieden wird, wird das eingebettete elektronische Bauteil von der verbleibenden geschäumten Schicht dauerhaft abgepolstert.

Zur Fixierung des elektronischen Bauteils in der Kavität kann zusätzlich oder ausschließlich ein Klebstoff verwendet werden. Auch das Ausgießen der Kavität mit einem Kunststoff zur besseren Einbettung des elektronischen Bauteils ist möglich.

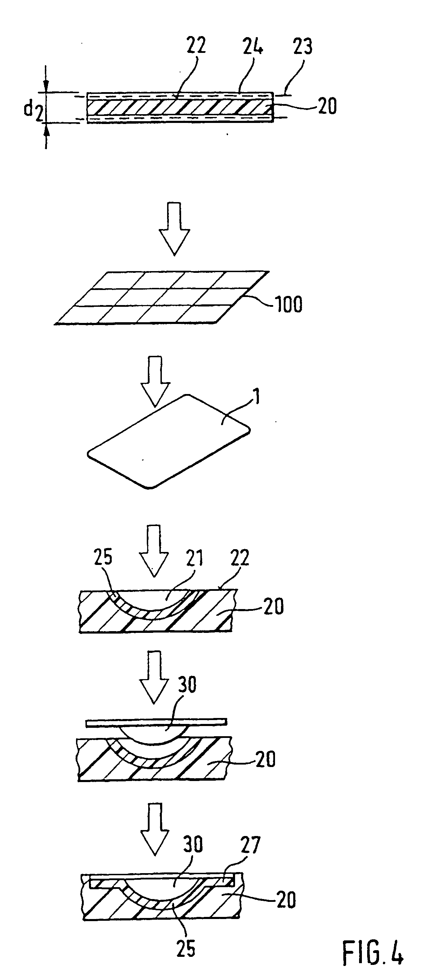

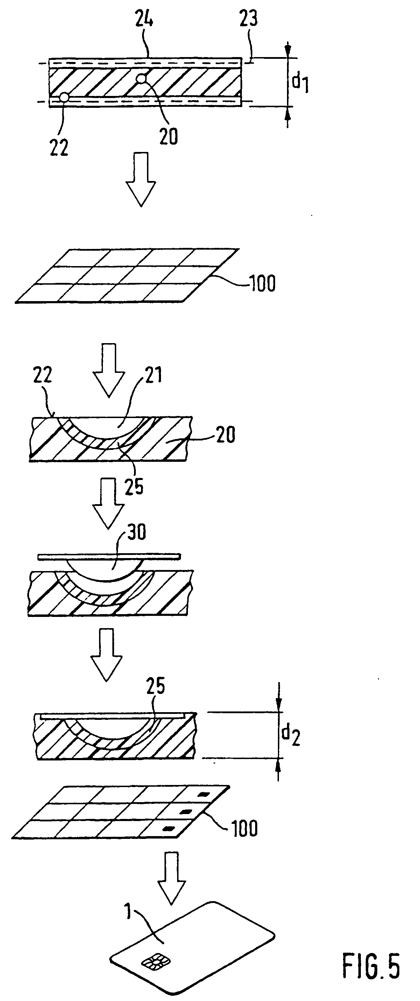

In den Fig. 4 und 5 sind zwei Verfahren zur Herstellung einschichtiger Chipkarten aus geschäumtem Kunststoffmaterial dargestellt. Gemäß Fig. 4 wird das geschäumte Kunststoffmaterial 20 als Mehrnutzenbogen 100 zur Verfügung gestellt, der bereits die endgültige Dicke d₂ der Standardkarte aufweist. Auf der Oberfläche 22 des Kunststoffmaterials 20 sind beidseitig ein Aufdruck 23 und eine Lackierung 24 aufgebracht. Aus dem Mehrnutzenbogen werden Einzelkarten 1 ausgestanzt. Von der Oberfläche 22 her wird sodann eine Kavität 21 in das Kunststoffmaterial 20 eingeprägt. Durch den Prägevorgang wird das geschäumte Kunststoffmaterial 20 in einem an die Kavität 21 angrenzenden Bereich 25 verdichtet. In die Kavität 21 wird anschließend ein elektronisches Bauelement 30, z.B. ein Modul, montiert.

Eine so gefertigte Karte 1 ist gegenüber den handelsüblichen Karten extrem leicht und erfordert nur wenig Material. Des Weiteren ist der Energiebedarf zur Herstellung einer solchen Karte vergleichsweise gering.

In Fig. 5 ist ein weiteres Verfahren zur Herstellung einer einschichtigen Chipkarte 1 dargestellt. In diesem Falle ist das geschäumte Kunststoffmaterial 20 zunächst dicker als die Dicke der fertigen Karte und wird erst in einem nachfolgenden Laminiervorgang verdichtet. Die Oberflächen 22 des Kunststoffmaterials 20 sind wiederum mit einem Aufdruck 23 und einer Ablackierung 24 versehen. Ausgehend von einem bedruckten und ablackierten Mehrnutzenbogen der Ausgangsdicke d₁ wird eine Kavität 21 in die Oberfläche 22 des Mehrnutzenbogens eingeprägt, wobei wiederum ein vorverdichteter Bereich 25 angrenzend an die Kavität 21 erzeugt wird. In die Kavität 21 wird sodann unter Anwendung von Druck oder Druck und Temperatur ein Modul 30 montiert. Erst beim Laminiervorgang wird der Mehrnutzenbogen 100 auf eine Dicke d₂ reduziert, wodurch das Kunststoffmaterial insgesamt verdichtet wird. Aus dem derart laminierten Mehrnutzenbogen 100 werden die einzelnen Karten 1 nachfolgend ausgestanzt.

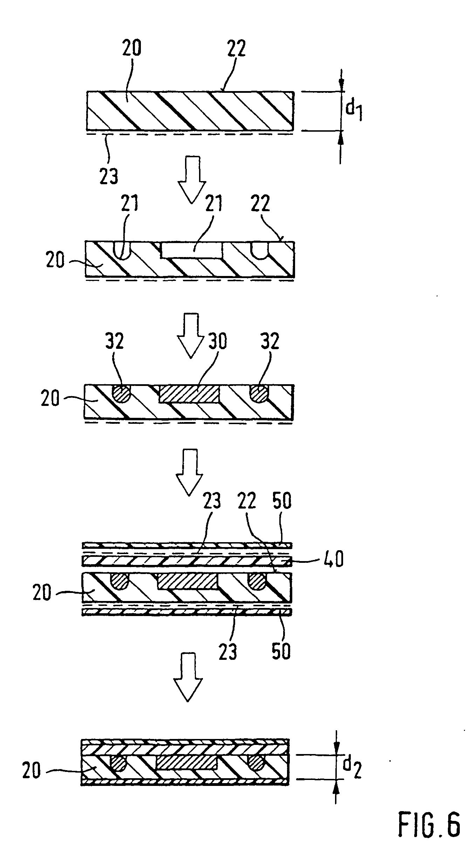

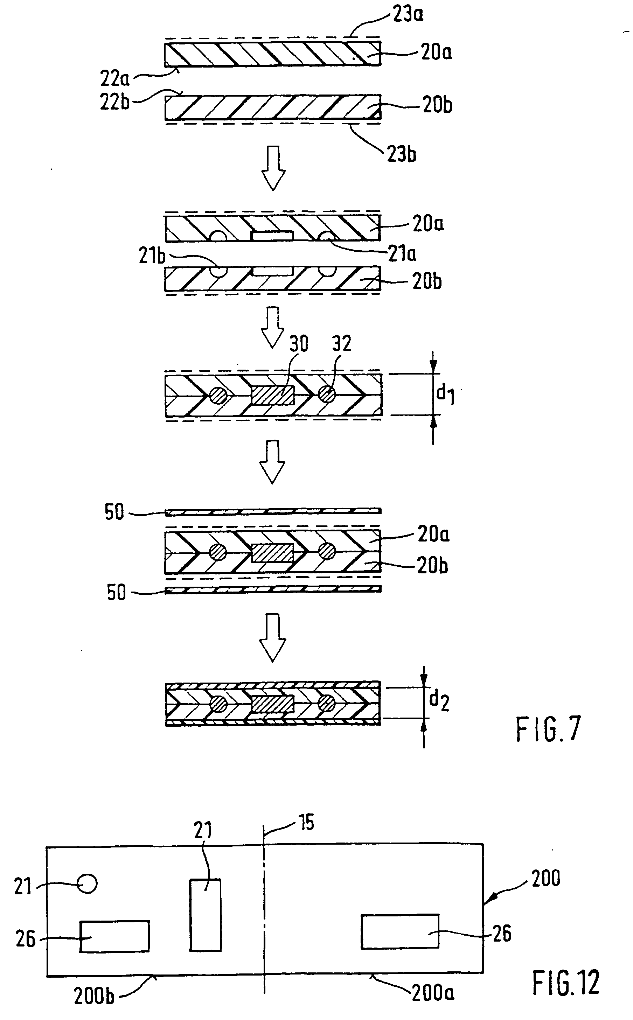

In den Fig. 6 und 7 sind zwei Verfahren zur Herstellung mehrschichtiger Chipkarten gezeigt. Dabei wird zunächst ein Karteninlett als Halbzeug für die Weiterverarbeitung im Laminiervorgang hergestellt.

Ausgehend von einer geschäumten Kunststofffolie 20 mit einem einseitigen Aufdruck 23 werden in die Oberfläche 22 der Kunststofffolie 20 Kavitäten 21 eingeprägt, in die nachfolgend elektronische Bauteile, wie beispielsweise ein Chip 30 und eine Spule 32, montiert werden. Beidseitig der geschäumten Kunststofffolie 20 werden Deckfolien 50 auflaminiert, wobei eine Zwischenschicht 40 auf der mit den Kavitäten versehenen Oberfläche 22 der geschäumten Kunststofffolie 20 vorgesehen werden kann. Die Zwischenschicht 40 deckt einerseits die elektronischen Bauelemente ab und dient andererseits als Grundlage für einen weiteren Aufdruck 23, der durch die transparente Deckfolie 50 vor Beschädigung geschützt wird.

Die geschäumte Kunststofffolie wird bei dem unter Druck- und Wärmeeinfluss stattfindenden Laminierprozess von ihrer Ausgangsdicke d₁ auf eine endgültige Dicke d₂ reduziert, wobei analog zu dem in Bezug auf Fig. 5 beschriebenen Laminierverfahren zunächst eine Vorverdichtung der Kavitäten 21 durch Vorprägung und anschließend eine weitere Verdichtung der Kavitäten bzw. eine erstmalige Verdichtung des übrigen Kunststoffmaterials durch den Laminiervorgang erzielt wird. Entsprechend dem in Fig. 5 beschriebenen Verfahren werden aus einem Mehrnutzenbogen einzelne Chipkarten ausgestanzt.

In Fig. 7 ist ein Verfahren zur Herstellung einer mehrschichtigen Chipkarte dargestellt, bei dem zwei übereinander angeordnete geschäumte Kunststofffolien 20a und 20b eingesetzt werden. Auf den außenseitigen Oberflächen der Kunststofffolien 20a und 20b sind Aufdrucke 23a bzw. 23b vorgesehen. In die einander gegenüberliegenden Oberflächen 22a und 22b sind Kavitäten 21a und 21b vorgeprägt, die in ihrer Summe einen Hohlraum für die zu montierenden Bauteile 30 bzw. 32 bilden. Die elektronischen Bauelemente 30 und 32 werden in die Kavitäten 21a und 21b zwischen den beiden Kunststofffolien 20a und 20b eingesetzt, so dass sich eine Ausgangsdicke d₁ vor dem Laminiervorgang ergibt. Anschließend werden Deckfolien 50 auf die jeweilige Außenseite der Kunststofffolien 20a und 20b auflaminiert. Bei dem Laminiervorgang unter Druck- und Temperatureinwirkung wird das geschäumte Kunststoffmaterial auf eine Dicke d₂ verdichtet.

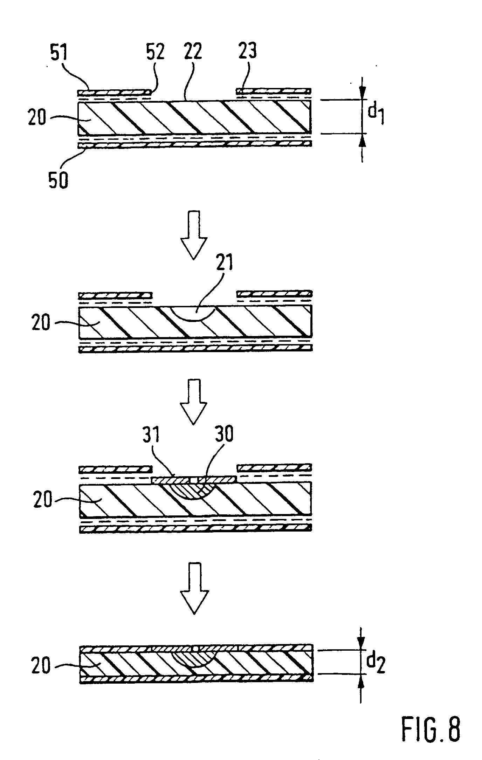

In Fig. 8 ist eine weitere Ausführungsform der vorliegenden Erfindung für die Herstellung mehrschichtiger Chipkarten dargestellt. In diesem Falle ist eine der beiden Deckfolien 50, 51 als Fensterfolie 51 ausgebildet mit Aussparungen 52 für die Kontaktflächen 31 eines Chipmoduls 30. Die Folien 50, 20 und 51 können beispielsweise von einer Rolle abgezogen oder als Bögen verarbeitet werden, wie das in der Laminiertechnik allgemein bekannt ist. Durch die Aussparungen 52 hindurch wird in die Oberfläche 22 der zentralen, geschäumten Kunststofffolie 20 eine Kavität 21 eingeprägt und ein Chipmodul 30 in diese Kavität 21 eingesetzt oder eingeklebt. Im nachfolgenden Laminiervorgang wird unter Anwendung von Wärme und Druck eine feste Verbindung zwischen den Bauteilen hergestellt, wobei eine Verdichtung des geschäumten Kunststoffmaterials von einer Ausgangsdicke d₁ auf eine reduzierte Dicke d₂ erfolgt.

Alternativ kann das Chipmodul 30 erst nach dem Laminiervorgang in die Kavität 21 der vorverdichteten Kunststofffolie eingesetzt werden. Auch ist denkbar, dass der Schritt des Einprägens der Kavität 21 in die geschäumte Kunststofffolie 20 erst nach dem Laminiervorgang und daran anschließend das Montieren des Moduls 30 in die Kavität 21 erfolgt.

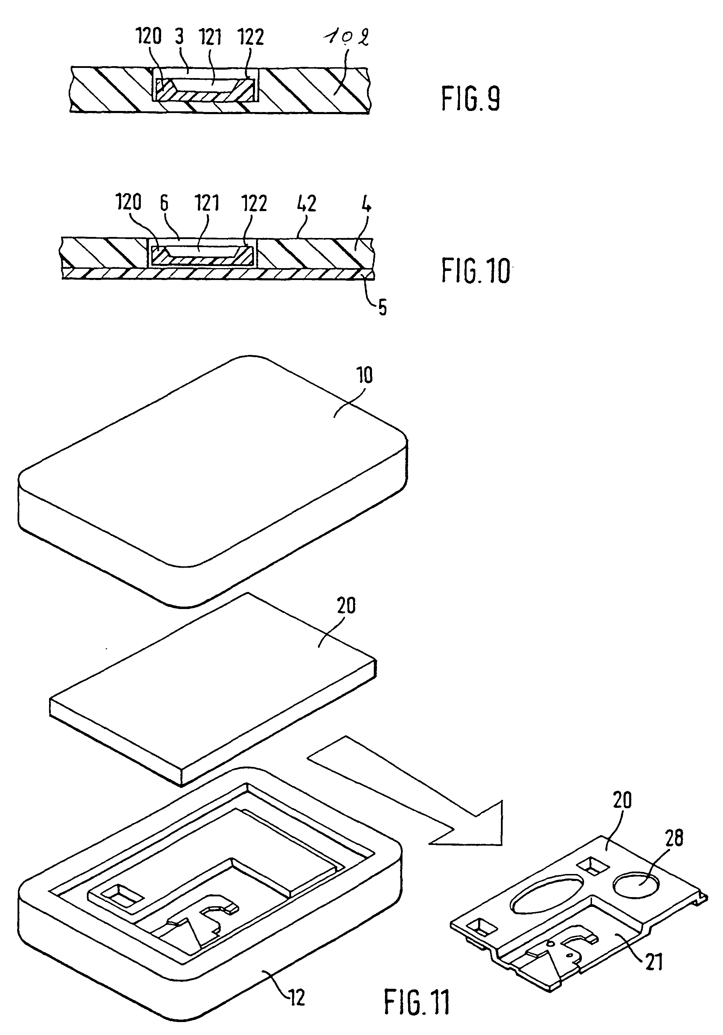

In den Fig. 9 und 10 sind zwei weitere alternative Ausführungsformen der vorliegenden Erfindung dargestellt. Fig. 9 zeigt den Kartenkörper 102 einer einschichtigen Chipkarte mit einer Aussparung 3, in die ein Einsatzelement 120 eingesetzt ist. Das Einsatzelement 120 besteht aus einem geschäumten Kunststoffmaterial, das in seiner Ausgangsform bündig zur Oberfläche des Kartenkörpers ist. Die Aussparung 3 ist unten geschlossen und kann beispielsweise im Spritzgussverfahren oder durch Ausfräsung erzeugt werden (Fig. 9). Ferner kann die Aussparung durch Fensterstanzungen in Folien im Laminierverfahren erzeugt werden. In diesem Fall wird das Einsatzelement, das in der Dicke entsprechend der Tiefe der Aussparung ausgeführt ist, im Laminierprozess mitverarbeitet. Das Erzeugen der Kavität kann an der fertigen Karte oder am fertig laminierten Bogen anstelle von Fräsen durch Prägen erzeugt werden. Durch Einsetzen bzw. Einkleben eines elektronischen Bauelements entsprechend Fig. 3 wird eine fertige Chipkarte hergestellt. Die Aussparung 3 kann zusätzlich mit einem Kunststoff ausgegossen werden, um das elektronische Bauteil fest in der Aussparung einzubetten.

In Fig. 10 ist ein Einsatzelement 120 im Zusammenhang mit der Herstellung einer mehrschichtigen Chipkarte dargestellt. Die Schicht 4 weist eine Ausstanzung 6 auf, die einseitig durch die Schicht 5 verschlossen ist. In die Ausstanzung 6 wird das Einsatzelement 120 eingesetzt, z.B. wie im Zusammenhang mit Fig. 9 beschrieben. Alternativ kann auch eine weitere Schicht auf die Oberfläche 42 der Schicht 4 auflaminiert werden, um so eine feste Verbindung der Schichten untereinander und mit dem darin eingeschlossenen elektronischen Bauelement zu schaffen.

Die Einsatzelemente bestehen aus geschäumtem Kunststoffmaterial und sind in ihrer Dicke und Kontur den Aussparungen angepasst. Sie stellen insbesondere Halbzeuge für die Chipkartenfertigung dar.

In Fig. 12 ist eine besondere Ausführungsform eines solchen Halbzeugs dargestellt. Fig. 12 zeigt eine geschäumte Kunststofffolie 200 mit definierten Außenmaßen und mit einer Falzlinie 15. Die Falzlinie 15 teilt die Kunststofffolie 200 in zwei gleiche Bereiche 200a und 200b, die aufeinander gefaltet werden können. Jeder Bereich 200a und 200b kann Kavitäten 21, 26 besitzen. Indem die Bereiche 200a und 200b entlang der Falzlinie 15 aufeinander geklappt werden, können mehrere Kavitäten 26 eine gemeinsame, große Kavität bilden, z.B. zur zentralen Anordnung einer Spule 32 oder eines Chips 30, wie in Fig. 7 gezeigt. Die Abmessungen der Kunststofffolie 200 können so bemessen sein, dass sich ein Einsatzelement, ähnlich dem Einsatzelement 120 in den Fig. 9 und 10 ergibt. Sie kann aber auch so bemessen sein, dass die übereinander gefalteten Bereiche 200a, 200b vollständige Schichten einer fertigen Chipkarte, d.h. ein sogenanntes Karteninlett bilden. Durch Auflaminieren äußerer Deckschichten auf die außenliegenden Oberflächen der Kunststofffolienbereich 200a und 200b kann eine fertige Karte hergestellt werden.

Fig.11 zeigt ein aus einem oberen und einem unteren Formwerkzeug 10, 12 bestehendes Prägewerkzeug. Zwischen die beiden Formwerkzeuge 10,12 wird ein geschäumtes Kunststoffmaterial 20 eingelegt und durch Zusammenbringen der beiden Formwerkzeuge 10, 12 lokal verdichtet bzw. so geprägt, dass sich Auswölbungen ergeben, wie diese von Blisterverpackungen bekannt sind. Durch das Verdichten können Kavitäten 21 geschaffen werden. Es ist möglich, dass vor oder nach dem Prägevorgang Durchbrüche 28 in dem Formteil 20, z.B. durch Ausstanzen, geschaffen werden. Die Formwerkzeuge können aber auch so gestaltet sein, dass gleichzeitig mit dem Verdichten der Bereiche 21 ein Ausstanzen der Bereiche 28 erfolgt.

Das in Fig. 11 dargestellte Formteil 20 ist sehr komplex. Darin liegt die besondere Überlegenheit gegenüber den bisher für Chipkarten verwendeten Kunststoffmaterialien. Hinzu kommt, dass die in ein solches Formteil 20 eingesetzten Bauelemente 30, 31, 32 aufgrund der Schaumstruktur des Kunststoffmaterials 20 wesentlich effektiver gegen mechanische Einflüsse geschützt sind.

Als geschäumtes Kunststoffmaterial 20 haben sich Homopolymere und Copolymere, insbesondere aus PVC, ABS und PET als geeignet erwiesen. Das Schaumvolumen des Kunststoffmaterials 20 sollte um 50 bis 300 % über dem ungeschäumten Volumen liegen. Bevorzugt wird ein Schaumvolumen, das um 200 % über dem ungeschäumten Volumen liegt. Es ist vorteilhaft, dem Kunststoffmaterial bis zu einem gewissen Grade Füllstoffe hinzuzufügen, um Eigenschaften in bestimmte Richtungen zu beeinflussen. Die Füllstoffe sollten jedoch nicht mehr als 30 Gew.% des Kunststoffmaterials ausmachen. Wichtige Füllstoffe sind z.B. Titandioxid, Kalziumcarbonat, Kieselsäureester oder Ruß.

Beim Verdichten des Materials 20,120 im Bereich der Kavität 21,121 sollte ein ausreichendes Schaumvolumen verbleiben, um das eingebettete elektronische Bauteil 30, 31, 32 gegen mechanische Einwirkungen schützen zu können. Jedoch sollte eine Verdichtung um mehr als 50 % bezogen auf das Ausgangsvolumen des Kunststoffmaterials 20,120 gewährleistet sein, weswegen die Ausgangsdicke d₁ des Kunststoffmaterials entsprechend hoch anzusetzen ist. Eine Verdichtung des von der Kavität 21, 121 entfernt liegenden Kunststoffmaterials ist nicht immer notwendig, ist aber zumindest im gewissen Umfang erwünscht. Daher sollte das Kunststoffmaterial eine Ausgangsdicke d₁ aufweisen, die größer ist als ein größter Abstand zwischen den zusammengebrachten Formwerkzeugen. Vorzugsweise sollte das Kunststoffmaterial 20, 120 in diesen, von der Kavität 21, 121 entfernt liegenden Bereichen bei einem Laminiervorgang auf etwa 50 % seines Ausgangsvolumens verdichtet werden.

Die Deckschichten laminierter Chipkarten oder auch die Schichten, in die das geschäumte Kunststoffmaterial als Halbzeug eingesetzt werden, können aus herkömmlicherweise für Chipkarten verwendetem Kunststoff bestehen.

## Patentansprüche

1. Verfahren zur Herstellung einer Karte mit wenigstens einem elektronischen Bauelement zum Einbringen eines Kunststoffmaterials zwischen zwei zusammen- und wieder auseinander bewegbare Formwerkzeuge (10,12), wovon eines einen Prägestempel aufweist, welcher mindestens eine Kavität definiert, **dadurch gekennzeichnet, daß**
- als Kunstoffmaterial (20) ein geschäumtes Material verwendet wird, in welchem Hohlraumeinschlüsse vorhanden sind, wobei das Kunststoffmaterial als Folie oder als Mehrnutzenbogen (100) zur Verfügung gestellt wird und die Einzelkarten daraus ausgestanzt werden,
- das Zusammenbringen der Formwerkzeuge so erfolgt, daß das Kunststoffmaterial (20) nach dem Auseinanderbewegen der Formwerkzeuge (10,12) in einem die Kavität (21,26,121) angrenzenden Bereich (25) lokal verdichtet ist, und
- das elektronische Bauelement (30,31,32) in die Kavität (21,26,121) montiert und eingebettet wird.

2. Verfahren nach Anspruch 1, **dadurch gekennzeichnet, dass** das Einbetten des elektronischen Bauelements in der Kavität unter Ausübung von Druck auf das elektronische Bauelement erfolgt, wobei das lokal verdichtete Kunststoffmaterial (25, 26) weiter verdichtet wird.

3. Verfahren nach Anspruch 1 oder 2, wobei zum Einbetten des elektronischen Bauelements in der Kavität ein Klebstoff verwendet wird.

4. Verfahren nach Anspruch 1, **dadurch gekennzeichnet, dass** das Einbetten des elektronischen Bauelements in der Kavität unter Ausübung von Druck und Temperatur auf die gesamte Oberfläche des Kunststoffmaterials erfolgt, wobei das gesamte Kunststoffmaterial weiter verdichtet wird.

5. Verfahren nach Anspruch 4, **dadurch gekennzeichnet, dass** das Kunststoffmaterial auf etwa 50 % seines Ausgangsvolumen verdichtet wird.

6. Verfahren nach Anspruch 1, **dadurch gekennzeichnet, dass** auf wenigstens einer der Oberflächen (22, 122) des Kunststoffmaterials (20, 120, 200) eine Deckschicht (50, 51) laminiert wird.

7. Verfahren nach Anspruch 6, **dadurch gekennzeichnet, dass** eine Deckschicht (51) als Fensterfolie auf die erste Oberfläche (22) auflaminiert wird und eine Verdichtung des Kunststoffmaterials (20) durch die Formwerkzeuge (10, 12) im Fensterbereich (52) der Fensterfolie erfolgt.

8. Verfahren nach Anspruch 1, wobei das Kunststoffmaterial aus zwei Lagen (20a, 20b, 200a, 200b) mit entsprechenden Kavitäten zusammengesetzt und ein elektronisches Bauelement (30, 32) zwischen diesen beiden Lagen angeordnet wird.

9. Verfahren zur Herstellung einer Karte mit wenigstens einem elektronischen Bauelement, **gekennzeichnet durch** folgende Schritte:
- Herstellen eines Einsatzelementes (120) mit einer Kavität (21, 26,121) zur Aufnahme eines elektronischen Bauelementes **durch** Ausführung eines Verfahrens nach einem der Ansprüche 1 bis 8,
- Bereitstellen eines Kartenkörpers (102, 4) mit einer auf das Einsatzelement (120) abgestimmten Ausnehmung (3, 6),
- Einfügen des Einsatzelementes (120) in die Ausnehmung (3, 6).

10. Karte mit einer Schicht aus geschäumten Kunststoffmaterial (20) und mit wenigstens einem, in einer in dem Kunststoffmaterial (20) eingeprägten Kavität plazierterm elektronischen Bauelement (30, 31, 32), wobei das Kunststoffmaterial (20) angrenzend an die Kavität einen Lokal verchichteten Bereich (25) aufweist, und wobei die Karte aus einer Folie oder einem Mehrnutzenbogen (100) ausgestanzt wird, hergestellt gemäß einem Verfahren nach einem der Ansprüche 1 bis 9.

## Claims

1. A method for producing a card having at least one electronic device for introduction of a plastic material between two molding tools (10, 12) adapted to be moved together and apart, one of which has an embossing die defining at least one cavity, **characterized in that**
- the plastic material (20) used is a foamed material in which hollow inclusions are present, the plastic material being provided as a film or as a multi-up sheet (100) and the single cards being punched out thereof,
- the molding tools are brought together in such a way that the plastic material (20) is locally compressed in an area (25) adjoining the cavity (21, 26, 121) after the molding tools (10, 12) are moved apart, and
- the electronic device (30, 31, 32) is mounted and embedded in the cavity (21, 26, 121).

2. The method according to claim 1, **characterized in that** the embedding of the electronic device in the cavity is effected while exerting pressure on the electronic device, whereby the locally compressed plastic material (25, 26) is compressed further.

3. The method according to claim 1 or 2, wherein an adhesive is used for embedding the electronic device in the cavity.

4. The method according to claim 1, **characterized in that** the embedding of the electronic device in the cavity is effected while exerting pressure and temperature on the total surface of the plastic material, whereby the total plastic material is compressed further.

5. The method according to claim 4, **characterized in that** the plastic material is compressed to about 50% of its initial volume.

6. The method according to claim 1, **characterized in that** a cover layer (50, 51) is laminated on at least one of the surfaces (22, 122) of the plastic material (20, 120, 200).

7. The method according to claim 6, **characterized in that** a cover layer (51) is laminated on the first surface (22) as a window film, and a compression of the plastic material (20) is carried out by the molding tools (10, 12) in the window area (52) of the window film.

8. The method according to claim 1, wherein the plastic material is composed of two layers (20a, 20b, 200a, 200b) with corresponding cavities, and an electronic device (30, 32) is disposed between said two layers.

9. A method for producing a card having at least one electronic device, **characterized by** the following steps:
- producing an insert element (120) with a cavity (21, 26, 121) for receiving an electronic device by performing a method according to any of claims 1 to 8,
- providing a card body (102, 4) having a recess (3, 6) matching the insert element (120),
- fitting the insert element (120) into the recess (3, 6).

10. A card having a layer of foamed plastic material (20) and having at least one electronic device (30, 31, 32) placed in a cavity embossed in the plastic material (20), the plastic material (20) having a locally compressed area (25) adjoining the cavity, and the card being punched out of a film or a multi-up sheet (100), produced by a method according to any of claims 1 to 9.

## Revendications

1. Procédé de fabrication d'une carte avec au moins un composant électronique pour la mise en place d'un matériau plastique entre deux outils de formage (10, 12) pouvant être rapprochés et redéployés dont un outil dispose d'un poinçon d'impression lequel définit au moins une cavité, **caractérisé en ce que**
- le matériau plastique utilisé (20) est un matériau moussé dans lequel se trouvent des inclusions alvéolaires, le matériau plastique pouvant être mis à disposition sous forme de feuille ou de rouleau (100), les cartes individuelles en étant découpées à la matrice.
- le rapprochement des deux outils de formage se fait de manière à ce que après le redéploiement des outils de formage (10, 12) le matériau plastique (20) soit comprimé localement dans une zone (25) avoisinant la cavité (21, 26, 121), et
- le composant électronique (30, 31, 32) est monté et inséré dans la cavité (21, 26, 121).

2. Procédé selon la revendication 1, **caractérisé en ce que** l'insertion du composant électronique dans la cavité se fait en appliquant de la pression sur le composant électronique, le matériau plastique (25, 26) localement comprimé étant ainsi comprimé d'avantage.

3. Procédé selon l'une quelconque revendication 1 ou 2, une colle étant utilisée pour l'insertion du composant électronique dans la cavité.

4. Procédé selon la revendication 1 **caractérisé, en ce que** l'insertion du composant électronique dans la cavité se fait en appliquant de la pression et de la température sur la totalité de la surface du matériau plastique, le matériau plastique étant ainsi comprimé d'avantage.

5. Procédé selon la revendication 4, **caractérisé en ce que** le matériau plastique est comprimé à environ 50% de son volume initial.

6. Procédé selon la revendication 1, **caractérisé en ce qu'**une couche de protection (50, 51) est laminée sur au moins une des surfaces (22, 122) du matériau plastique (20, 120, 200).

7. Procédé selon la revendication 6, **caractérisé en ce qu'**une couche de protection (51) sous forme de feuille à fenêtre est laminée sur la première surface (22), le matériau plastique (20) étant comprimé par les outils de formage (10, 12) dans la zone de la fenêtre (52) de la feuille à fenêtre.

8. Procédé selon la revendication 1, le matériau plastique étant composé de deux couches (20a, 20b, 200a, 200b) avec des cavités respectives, un composant électronique (30, 32) étant disposé entre ces deux couches.

9. Procédé de fabrication d'une carte avec au moins un composant électronique, **caractérisé par** les étapes suivantes :
- fabrication d'un élément d'insertion (120) avec une cavité (21, 26, 121) pour la réception d'un composant électronique en appliquant un procédé selon l'une quelconque des revendication 1 à 8,
- mise à disposition d'un corps de carte (102, 4) avec un creux (3, 6) adapté à l'élément d'insertion (120),
- mise en place de l'élément d'insertion (120) dans le creux (3, 6).

10. Carte dotée d'une couche de matériau plastique (20) moussé avec au moins un composant électronique (30, 31, 32) placé dans une cavité formée par impression dans le matériau plastique (20), le matériau plastique (20) avoisinant la cavité présentant une zone localement comprimée (25) et la carte étant découpée à la matrice d'une feuille ou d'un rouleau (100), fabriquée suivant un procédé selon l'une quelconque revendication 1 à 9.
